# EUROPEAN PATENT APPLICATION

(11) **EP 4 205 557 A1**
(43) Date of publication of application: **05.07.2023**
(21) Application number: 23152080.0
(22) Date of filing: 05.06.2020
(51) Int. Cl.: A23L 13/40, A23B 4/02, A23B 4/027, A23B 4/12, A23B 4/20, A23B 4/24, A23L 13/60, A23L 13/70, A23L 3/3526, A23L 13/72, A23L 13/74

(54) **COMPOSITION FOR MAINTAINING OR IMPROVING THE QUALITY OF PROCESSED MEAT**

(30) Priority: 05.06.2019 EP 19178475
(62) Divisional of application: 20729801.9
(71) Applicant: Purac Biochem B.V., 4206 AC Gorinchem (NL)
(72) Inventor: Hilhorst, Gerrit Anthon Rene, Gorinchem (NL); Karleen, Saffiera, Gorinchem (NL); van Dijk, Lonneke, Gorinchem (NL); Yi, Liya, Gorinchem (NL); Kumar, Saurabh, Gorinchem (NL); McCoy, Garrett Douglas, Gorinchem (NL)
(74) Representative: Nederlandsch Octrooibureau

(57) **Abstract**

The present composition for maintaining or improving the quality of processed meat comprises on a dry matter basis:
• between 20 and 60% w/w acid equivalent of an organic acid component selected from the group of acetate, lactate, propionate and combinations thereof;
• between 0.05 and 5% w/w acid equivalent of nitrite;
• between 0.5 and 5% w/w acid equivalent of ascorbate; and
• between 5 and 50% w/w of a vegetal fiber selected from the group of microfibrillated cellulose fiber, inulin and combinations thereof;
wherein the composition when diluted with distilled water of 20°C to a dry matter content of 10% w/w has a pH in the range of 5.0 to 9.0.

This composition can replace conventional stabilizers, acid regulators and anti-oxidants without deteriorating the quality of the processed meat. Furthermore, this composition can be composed of "label friendly" ingredients, with a more attractive consumer perception.

The invention also relates to a method for the preparation of the aforementioned meat treatment composition.

## Description

### TECHNICAL FIELD OF THE INVENTION

The invention relates to compositions for maintaining or improving the quality of processed meat comprising (i) an organic acid component selected from the group of acetate, lactate and combinations thereof, (ii) nitrite, (iii) ascorbate and (iv) vegetal fiber. The invention further relates to a method for the preparation of these compositions and a process of preparing processed meat.

### BACKGROUND OF THE INVENTION

Processed meat is meat that has been subjected to modification in order to improve its taste and/or to extend its shelf life. Processing methods include e.g. grinding, salting, curing, fermentation and smoking. Examples of processed meat products are bacon, ham, sausages, salami, corned beef, beef jerkey, canned meat and meat-based sauces.

In order to attain processed meat with the desired properties, various additional ingredients are commonly used. These additives may contribute to the shelf life, both microbiologically and chemically, the texture, flavor and color of the product and to the yield of the method of preparation. Conventional additives are e.g. salts, phosphates, benzoates, acids, nitrate or nitrite (from chemical sources), caseinate. Such additives may be disliked by consumers because they are perceived as "chemical" or "artificial" or the like. There is a need for additives that are perceived as more "natural" or "responsible" or "recognizable".

Attempts to replace these "chemical" additives by more attractive, "label friendly" additives are often hampered due to the complexity of the functional effects of the former additives. Phosphates for instance are known to affect not only the pH stability but also the protein extraction from the meat, the water-holding capacity and the hydration of the meat. Nitrate and nitrite are known to affect not only the color and the flavor of the meat but also have an antimicrobial effect. Since there generally also is a complex interplay between the different additives in their effects, it has turned out to be difficult to find alternatives for conventional "chemical" additives.

EP3106041A1 describes meat treatment compositions comprising one or more acetic acid salts and one or more polysaccharide materials which are particularly effective in reducing moisture loss during cooking of meat. Since in some embodiments of these compositions, the ingredients can be based on natural vinegar and plant derived fiber materials, these compositions may also be attractive from the perspective of "label friendly" additives.

WO/2018/106109 describes a meat treatment composition comprising a combination of a buffered food acid component in the form of partially or completely neutralized acetic acid and a nitrite source in the form of a cultured vegetable extract.

CN107811214 A describes the preparation of a sausage using 25 to 35 servings of pig hind leg, 15 to 25 servings of peeled chicken breasts and 15 to 25 servings of porcine ridges, by adding to this meat 8 to 12 rose parts, 4 to 6 parts of rose pollen, 3 to 6 parts of inulin, 24 to 30 parts of ice water, 6 to 7 parts of acetate starch, 5 to 8 parts of honey 3 to 4 parts of citric acid, 2.2 to 2.6 parts of common salt, 1 to 3 parts of soybean protein isolate, 0.20 to 0.25 part of sodium pyrophosphate, 0.1 to 0.15 part of sodium tripolyphosphate, 3 to 4 parts of white granulated sugar, 0.3 to 0.5 of spice parts, carrageenan 0.2-0.3 parts, konjac gum 0.1-0.15 parts, monosodium glutamate 0.1-0.12 parts, yeast extract 0.3-0.4 parts, D-sodium erythorbate 0.1-0.2 parts, potassium sorbate 0.1-0.12 parts, red Qu Hong 0.006, temptation red 0.004, sodium nitrite 0.005.

CN109452569 describes a sugar-free sausage containing pork lean meat (60-80 parts), pork belly (20-40 parts), *Artemisia argyi* seed powder (1-3 parts), Lotus root starch (0.5-1.5 parts), mogroside (0.05-0.2 parts) apple dietrary fibre (1-3 parts), white pepper (0.1-0.3 parts), ginger powder (0.1-0.3 parts), sodium polyphosphate (0.1-0.2 parts), sodium pyrophosphate (0.1-0.25 parts), sodium D-isoascorbate (0.1-0.3 parts), sodium nitrite (0.003-0.006 parts), sodium dehydroacetate(0.01-0.02 parts), sodium lactate (0.5-1 parts), nisin (0.008-0.018 parts), cochineal red (0.002-0.005 parts), salt (0.8-1.5 parts), yeast extract (0.3-0.6 parts), protein (0.8-2 parts), water (9-15 parts).

BE1020 864A3 describes meat treatment compositions in the form of a powder mixture of (i) lactate/acetate and (ii) starch and/or vegetable fiber. The vegetable fiber may be wheat bran, oat bran, pea fibre, and fibre from bamboo or carrots.

WO/2012/140293 A1 relates to a product that can be used to replace sodium chloride in meat products and that comprises a chloride salt other than sodium chloride, a lactate, an encapsulated acid or a precursor of an acid, and other food additives

It is the objective of the invention to find additive compositions for processed meat that have multiple functionalities and that are considered more attractive to consumers than conventional additives.

### SUMMARY OF THE INVENTION

The inventors have developed a composition for maintaining or improving the quality of processed meat that has multiple functionalities and that can be based on "label friendly" vegetal ingredients.

The present composition for maintaining or improving the quality of processed meat comprises on a dry matter basis:
- between 20 and 60% w/w acid equivalent of an organic acid component selected from the group of acetate, lactate and combinations thereof;
- between 0.05 and 5% w/w acid equivalent of nitrite;
- between 0.5 and 5% w/w acid equivalent of ascorbate; and
- between 5 and 50% w/w of a vegetal fiber selected from the group of microfibrillated cellulose fiber, inulin and combinations thereof;
wherein the composition when diluted with distilled water of 20°C to a dry matter content of 10% w/w has a pH in the range of 5.0 to 9.0.

It was found that this combination of ingredients can replace conventional stabilizers, acid regulators and anti-oxidants without deteriorating the quality of the processed meat. Furthermore, this composition can be composed of vegetal ingredients, with a more attractive consumer perception.

The invention also relates to a method for the preparation of a composition for maintaining or improving the quality of processed meat, the method comprising
- providing an organic acid product selected from the group of a vinegar product, a lactic acid fermentation product and combinations thereof, containing on a dry weight basis at least 50% w/w acid equivalent of acetate and/or lactate, wherein the acetate is selected from sodium acetate, potassium acetate, calcium acetate, acetic acid and combinations thereof and wherein the lactate is selected from sodium lactate, potassium lactate, calcium lactate, lactic acid and combinations thereof,
- providing a cultured vegetable extract containing on a dry weight basis at least 0.3% w/w acid equivalent of nitrite
- providing a fruit extract containing on a dry weight basis at least 10% w/w ascorbate
- providing a vegetal fiber selected from the group of citrus fiber and inulin;
- mixing the organic acid product, the cultured vegetable extract, the fruit extract and the vegetal fiber to prepare a composition with a dry matter content of at least 30% w/w, preferably at least 50% w/w.

The invention also relates to a process of preparing processed meat, said process comprising adding the composition according to the invention to processed meat in an amount of between 0.5 and 15% w/w dry matter.

### DETAILED DESCRIPTION OF THE INVENTION

Accordingly, a first aspect of the invention relates to a composition for maintaining or improving the quality of processed meat comprising on a dry matter basis:
- between 20 and 60% w/w acid equivalent of an organic acid component selected from the group of acetate, lactate and combinations thereof;
- between 0.05 and 5% w/w acid equivalent of nitrite;
- between 5 and 50% w/w of a vegetal fiber selected from the group of microfibrillated cellulose fiber (MCF), inulin and combinations thereof; and
- between 0.5 and 5% w/w acid equivalent of ascorbate;
wherein the composition when diluted with distilled water of 20°C to a dry matter content of 10% w/w has a pH in the range of 5.0 to 9.0.

The term "acetate" as used herein, unless indicated otherwise, encompasses acetic acid, salts of acetic acid, dissociated acetate and combinations thereof.

The term "lactate" as used herein, unless indicated otherwise, encompasses lactic acid, salts of lactic acid, dissociated lactate and combinations thereof.

The term "propionate" as used herein, unless indicated otherwise, encompasses propionic acid, salts of propionic acid, dissociated propionate and combinations thereof.

The concentration of acetate expressed as "% w/w acid equivalent" refers to the total concentration of acetate assuming that all acetate is present as acetic acid.

The concentration of lactate expressed as "% w/w acid equivalent" refers to the total concentration of lactate assuming that all lactate is present as lactic acid.

The concentration of propionate expressed as "% w/w acid equivalent" refers to the total concentration of propionate assuming that all propionate is present as propionic acid.

The term "nitrite" as used herein, unless indicated otherwise, encompasses nitrous acid, salts of nitrous acid, dissociated nitrite and combinations thereof.

The concentration of nitrite expressed as "% w/w acid equivalent" refers to the total concentration of nitrite assuming that all nitrite is present as nitrous acid.

The term "ascorbate" as used herein, unless indicated otherwise, encompasses ascorbic acid, salts of ascorbic acid, dissociated ascorbate and combinations thereof.. The term "ascorbate" further encompasses iso-ascorbic acid (erythorbic acid), salts of iso-ascorbic acid, dissociated iso-ascorbate and combinations thereof.

The concentration of ascorbate expressed as "% w/w acid equivalent" refers to the total concentration of ascorbate assuming that all ascorbate is present as ascorbic acid.

The term "microfibrillated cellulose fiber" or "MCF", as used herein, unless indicated otherwise, refers to water-insoluble cellulose microfibrils, more particularly to water-insoluble cellulose microfibrils having a length L and a mean diameter D, wherein the ratio L/D is at least 30 and D is in the range of 1-50 nm. These cellulose microfibrils are no longer meshed into a cell wall polysaccharide matrix as a result of a defibrillation treatment, e.g. high pressure homogenization.

The term "diameter" as used herein in relation to particle, unless indicated otherwise, refers to the average equivalent spherical diameter of said particle. Likewise, unless indicated otherwise, the term "diameter" as used herein in relation to a microfibril, refers to the average diameter of said microfibril.

In another embodiment, the invention relates to a composition for maintaining or improving the quality of processed meat comprising on a dry matter basis:
- between 20 and 60% w/w acid equivalent of an organic acid component selected from the group of acetate, lactate, propionate and combinations thereof;
- between 0.05 and 5% w/w acid equivalent of nitrite;
- between 5 and 50% w/w of a vegetal fiber selected from the group of microfibrillated cellulose fiber (MCF), inulin and combinations thereof; and
- between 0.5 and 5% w/w acid equivalent of ascorbate;
wherein the composition when diluted with distilled water of 20°C to a dry matter content of 10% w/w has a pH in the range of 5.0 to 9.0.

The composition can be a powder having a water content of less than 15% w/w or an aqueous liquid having a dry matter content of 10 to 80% w/w.

If the composition is a powder, the acetate is preferably selected from sodium acetate, potassium acetate, calcium acetate, acetic acid and combinations thereof. Similarly, the lactate is preferably selected from sodium lactate, potassium lactate, calcium lactate, lactic acid and combinations thereof, and the propionate is preferably selected from sodium propionate, potassium propionate, calcium propionate, propionic acid and combinations thereof. Further, the nitrite is preferably selected from sodium nitrite, potassium nitrite, calcium nitrite, nitrous acid and combinations thereof. The ascorbate is preferably selected from sodium ascorbate, potassium ascorbate, ascorbic acid and combinations thereof.

In a preferred embodiment, the composition is a powder having a water content of less than 15% w/w; wherein the acetate, if present, is selected from sodium acetate, potassium acetate, calcium acetate, acetic acid and combinations thereof; wherein the lactate, if present, is selected from sodium lactate, potassium lactate, calcium lactate, lactic acid and combinations thereof; wherein the propionate, if present, is selected from sodium propionate, potassium propionate, calcium propionate, propionic acid and combinations thereof; wherein the nitrite, if present, is selected from sodium nitrite, potassium nitrite, calcium nitrite, nitrous acid and combinations thereof and wherein the ascorbate, if present, is selected from sodium ascorbate, potassium ascorbate, ascorbic acid and combinations thereof. More preferably, the water content of the powder is less than 10% w/w, even more preferably less than 7% w/w.

In a preferred embodiment, the acetate is present as sodium acetate. In yet another preferred embodiment, the lactate is present as sodium lactate. In yet another preferred embodiment, the propionate is present as sodium propionate. In yet another preferred embodiment, the nitrite is present as sodium nitrite. In yet another preferred embodiment, the ascorbate is present as sodium ascorbate.

According to another preferred embodiment, the composition is an aqueous liquid having a dry matter content of 10 to 80% w/w. More preferably, the dry matter content of the aqueous liquid is between 20 and 75% w/w, even more preferably between 30 and 70% w/w.

In the composition in liquid form, the acetate is preferably selected from acetate (in its dissociated form), acetic acid and combinations thereof. The lactate is preferably selected from lactate (in its dissociated form), lactic acid and combinations thereof. The propionate is preferably selected from propionate (in its dissociated form), propionic acid and combinations thereof. The nitrite is preferably selected from nitrite (in its dissociated form), nitrous acid and combinations thereof. The ascorbate is preferably selected from ascorbate (in its dissociated form), ascorbic acid and combinations thereof.

In a preferred embodiment of the invention, the composition comprises on a dry matter basis between 25 and 55% w/w, more preferably between 30 and 50% w/w, acid equivalent of the organic acid component selected from the group of acetate, lactate and combinations thereof.

In another preferred embodiment of the invention, the composition comprises on a dry matter basis between 25 and 55% w/w, more preferably between 30 and 50% w/w, acid equivalent of the organic acid component selected from the group of acetate, lactate, propionate and combinations thereof.

The acetate in the composition is preferably derived from neutralized vinegar. Vinegar can be generally defined as an aqueous solution of acetic acid that additionally contains small quantities of components that are produced during fermentation, e.g. by the fermentation organisms. Vinegar is broadly used as a cooking ingredient and in pickling. Vinegar is preferably obtained by fermentation of a dilute ethanol-containing substrate, preferably using acetic acid bacteria. This ethanol-containing substrate is preferably obtained by yeast fermentation of a vegetal product. The vinegar may be selected from the group consisting of white vinegar, brandy vinegar, alcoholic vinegar, balsamic vinegar, wine vinegar, malt vinegar, beer vinegar, potato vinegar, rice vinegar, apple vinegar, cherry vinegar, and cane vinegar. In a particularly preferred embodiment of the invention, the vinegar is cane vinegar.

In another preferred embodiment of the invention, the acetate content of the neutralized vinegar is at least 5% (w/w), more preferably at least 7.5% (w/w/, even more preferably at least 10% (w/w). It is also possible to make use of neutralized vinegar that has been pre-concentrated to a certain extent. Such products are commercially available and typically have an acetate content between 20 and 30% (w/w). In a preferred embodiment of the invention, the acetate content is at least 20% (w/w), more preferably at least 25% (w/w), e.g. about 29 or 30% (w/w).

Neutralized vinegar may be produced by adding an alkalizing agent to vinegar, preferably an alkalizing metal salt, such as a metal carbonate or a metal hydroxide. The metal hydroxide is preferably selected from sodium hydroxide, potassium hydroxide, calcium hydroxide and combinations thereof. Most preferably, the metal hydroxide is sodium hydroxide.

The neutralized vinegar may suitably be concentrated by water removal, eg by evaporation, and/or dried, eg by spray drying.

Preferably, the neutralized vinegar when diluted with distilled water of 20°C to a dry matter content of 10% w/w preferably has a pH of at least 6, more preferably of at least 7, even more preferably of at least 7.5, most preferably of at least 8.0.

In accordance with an embodiment of the invention, the neutralized vinegar is provided in the form of a free flowing powder. The production of free flowing powders from liquid neutralized vinegars, using conventional drying techniques such as spray drying, has been described in the art. For example, international patent application no. WO/2014/021719, the disclosure of which is hereby incorporated by reference in its entirety, describes processes of producing free flowing powders from alkalized vinegar. Additionally, neutralized vinegars in free flowing powder form are commercially available.

The lactate is preferably provided in the form of a lactic acid fermentation product. The fermentation process for the production of lactate is generally carried out by fermentation of a sugar-containing medium with micro-organisms capable of transforming the sugar into lactic acid. Such micro-organisms are well-known to the person skilled in the art and include lactic acid bacteria. Sugars that can be used generally are C₆ sugars in both monosaccharide and disaccharide form such as glucose, saccharose and lactose. Preferably, saccharose from cane, corn or beet is used. The fermentation can generally be carried out with or without pH control. Without pH control, the pH will decrease with ongoing fermentation due to the production of lactic acid. With pH control, alkalizing agents are added to the fermentation broth in order to maintain the pH at a desired level such as a neutral or near-neutral pH. Alkalizing agents that are typically used are sodium hydroxide, potassium hydroxide, calcium hydroxide etcetera. After fermentation, the lactic acid fermentation product is usually further processed by means of downstream processes such as centrifugation, filtration, membrane filtration, distillation, extraction, evaporation and drying in order to purify and concentrate the product.

Preferably, the lactate is a neutralized lactic acid fermentation product that is obtained by means of lactic acid fermentation and addition of an alkalizing agent. The alkalizing agent preferably is an alkalizing metal salt, such as a metal carbonate or a metal hydroxide. More preferably, the metal hydroxide may be sodium hydroxide, potassium hydroxide or calcium hydroxide. Most preferably, the metal hydroxide is sodium hydroxide.

The neutralized lactic acid fermentation product may suitably be concentrated by water removal, eg by evaporation, and/or dried, eg by spray drying.

The neutralized lactic acid fermentation product when diluted with distilled water of 20°C to a dry matter content of 10% w/w preferably has a pH of at least 6, more preferably of at least 7, even more preferably of at least 7.5, most preferably of at least 8.0.

In accordance with an embodiment of the invention, the neutralized lactic acid fermentation product is provided in the form of a free flowing powder. The production of free flowing powders from liquid neutralized lactic acid fermentation products, using conventional drying techniques such as spray drying, has been described in the art. For example, European patent no. EP2879524B1, the disclosure of which is hereby incorporated by reference in its entirety, describes processes of producing free flowing powders from neutralized lactic acid fermentation products containing both Na and Ca. Additionally, neutralized lactic acid fermentation products in free flowing powder form are commercially available.

The propionate is preferably derived from a propionic acid fermentation product. The fermentation process for the production of propionate is generally carried out by fermentation of either a sugar-containing medium or a lactic acid containing medium with micro-organisms capable of transforming the substrate into propionic acid. Such micro-organisms are well-known to the person skilled in the art and include propionibacteria. Sugars that can be used generally are C₆ sugars in both monosaccharide and disaccharide form such as glucose, saccharose and lactose. Preferably, saccharose from cane, corn or beet is used. The fermentation can generally be carried out with or without pH control. Without pH control, the pH may decrease with ongoing fermentation due to the production of lactic acid. With pH control, alkalizing agents are added to the fermentation broth in order to maintain the pH at a desired level such as a neutral or near-neutral pH. Alkalizing agents that are typically used are sodium hydroxide, potassium hydroxide, calcium hydroxide etcetera. After fermentation, the propionic acid fermentation product is usually further processed by means of downstream processes such as centrifugation, filtration, membrane filtration, distillation, extraction, evaporation and drying in order to purify and concentrate the product.

Preferably, the propionate is obtained by means of propionic acid fermentation and preferably an alkalizing agent is added to the propionic acid fermentation product so obtained. The alkalizing agent preferably is an alkalizing metal salt, such as a metal carbonate or a metal hydroxide. More preferably, the metal hydroxide may be sodium hydroxide, potassium hydroxide or calcium hydroxide. Most preferably, the metal hydroxide is sodium hydroxide.

Before or after neutralization, the propionic acid fermentation product may suitably be concentrated by water removal, eg by evaporation, and/or dried, eg by spray drying.

The neutralized propionic acid fermentation product when diluted with distilled water of 20°C to a dry matter content of 10% w/w preferably has a pH of at least 6, more preferably of at least 7, even more preferably of at least 7.5, most preferably of at least 8.0.

In accordance with an embodiment of the invention, the neutralized propionic acid fermentation product is provided in the form of a free flowing powder. The production of free flowing powders from liquid propionic acid fermentation products, using conventional drying techniques such as spray drying, has been described in the art. Additionally, propionic acid fermentation products in free flowing powder form are commercially available.

Nitrate and nitrite are well known additives for meat which can not only contribute to the pink or red color of meat but also can enhance the microbiological safety and shelf life of meat products and the organoleptic quality. These effects are related to nitrite, whereas nitrate can be applied as a source for nitrite and is to be converted into nitrite after addition to the meat product. As a more natural source of nitrite, use can be made of cultured vegetable extract. This nitrite source is a vegetable extract containing significant amounts of nitrate, which has been contacted and incubated with viable micro-organisms under conditions suitable for said micro-organisms to convert nitrate into nitrite by their inherent metabolism.

In this document the term "vegetable extract" is used to refer to a composition of matter derived from food-grade plant materials, typically by mainly physical treatment of plant material, such as by cutting, macerating, pressing, solid-liquid extractions, concentrating, drying, etc. In a preferred embodiment, the vegetable extract is a liquid fraction derived from food-grade plant materials, which may also be referred to as a vegetable juice. Embodiments are envisaged wherein vegetable juice solids are provided in concentrated or in partially or completely dried form. The use of vegetable juice and/or vegetable (juice) concentrate is particularly preferred, in accordance with the invention.

The food grade plant material may be any nitrate-containing plant containing a significant amount of nitrate. In one embodiment the plant material comprises fresh plant parts, such as, in particular, leaves, flowers, stems and/or roots.

Preferred plant materials contain a high concentration of natural nitrate. Thus, for example, the nitrate concentration of the plant material is at least about 100 ppm, e.g. at least about 200 ppm, at least about 300 ppm, at least about 400 ppm, at least about 500 ppm, at least about 600 ppm, or at least about 700 ppm. The nitrate concentration of the plant material is preferably 24000 ppm or less, e.g., about 20000 ppm or less, about 15000 ppm or less, about 10000 ppm or less, about 8000 ppm or less, about 5000 ppm or less, about 3000 ppm or less, about 2500 ppm or less, or about 2000 ppm or less.

Suitable plant materials include, but are not limited to celery, beet, spinach, lettuce, cabbage, cucumber, eggplant, mushroom, green pepper, butternut squash, zucchini, mixed salad greens, carrot, artichoke, green bean, lima bean, broccoli, cauliflower, collard green, com, mustard, okra, onion, Chines pea pod, black eyed pea, green pea, potato, turnip, sauerkraut, radish and the like. Other edible plant material containing significant amounts of nitrate can also be used. Any mixture or combination of plant materials can be used in accordance with the invention. In a particularly preferred embodiment the nitrite source is derived from celery juice or extract.

In a preferred embodiment of the invention, the vegetable extract has a nitrate concentration of at least about 100 ppm, e.g. at least about 200 ppm, at least about 300 ppm, at least about 400 ppm, at least about 500 ppm, at least about 600 ppm, or at least about 700 ppm. The nitrate concentration of the vegetable extract is preferably 24000 ppm or less, e.g., about 20000 ppm or less, about 15000 ppm or less, about 10000 ppm or less, about 8000 ppm or less, about 5000 ppm or less, about 3000 ppm or less, about 2500 ppm or less, or about 2000 ppm or less.

In an advantageous embodiment of the invention the vegetable extract, juice or concentrate comprises celery extract, celery juice or celery concentrate. Suitable commercial products are available from commercial suppliers such as from Florida Food Products Inc., under the product name 'Veg Stable^{®} 501' and 'Veg Stable^{®} 502', from Diana Naturals, under the product name 'Celery juice concentrate', and from Vegetable Juices, Inc.

Any organism capable of converting nitrate to nitrite can be used to produce a vegetable extract according to the present invention. Suitable organisms include but are not limited to yeast, fungi, and bacteria. The organism can be, for example, E. coli, Rhodobacter sphaeroides, Paracoccus pantotrophus, Wautersia eutropha, Bradyrhizobium japonicum, any Pseudomonas species, Campylobacter jejunii, Wollinella succinogenes, Haemophylus influenzae, Shewanella oneidensis, Desulfitobacterium hafniense, Rhodobacter capsulatus, Klebsiella pneumoniae, Bacillus subtilis, the genus Cyanobacteria, any Synechococcus species, the genus Haloferax, the genus Haloarcula, and Thermus thermophilus. Preferably, the organism is a single strain or combination of bacterial strains within the Micrococcaceae family, including Micrococcus and Staphylococcus, Gram-positive cocci, including Enterococcus, Lactococcus, Leuconostoc, Pediococcus, Streptococcus, and Staphylococcus, and all lactic acid bacteria. Examples of the organism or organisms useful in the context of the invention include M. varians, S. carnosus, S. vitulinus, S. xylosus or a combination thereof. Embodiments of the invention are also envisaged, wherein the conversion of nitrate into nitrite is accomplished using a suitable enzyme preparation, typically a preparation comprising nitrate reductase.

In preferred embodiments, the nitrite source of the meat treatment composition according to the present invention is a composition obtainable by a process comprising the steps of:
i) providing a liquid vegetable extract, preferably a vegetable juice or vegetable (juice) concentrate;
ii) inoculating the liquid vegetable extract with one or more micro-organisms capable of converting nitrate into nitrite; and
iii) incubating the inoculated vegetable extract under conditions favorable to the growth of said micro-organism to produce a cultured vegetable extract.

The incubating step is optionally followed by one or more purification steps. Optionally, the one or more purification steps of the cultured vegetable extract comprise centrifugation and/or filtration of the cultured vegetable extract, with the proviso that the purification results in a nitrite level, on dry solids weight basis, of not more than 90 %, more preferably of not more than 80 %, even more preferably of not more than 70 % and most preferably of not more than 60 %. In a preferred embodiment the process does not involve any processing aimed at purification or isolation of the nitrite, otherthan solid-liquid separation and/or concentration. In an embodiment, the cultured vegetable extract as obtained in step iii) is used directly as the nitrite source in the present meat treatment compositions.

The cultured vegetable extract that is employed in accordance with the present invention preferably has a nitrite content, calculated by weight of dry matter, of at least 0.25 wt.%, more preferably of at least 0.5 wt.%, even more preferably of at least 0.75 wt.% and most preferably of at least 1.0 wt.%. Typically, the cultured vegetable extract contains not more than 10 wt.%, more preferably not more than 5 wt.% of nitrite, calculated by weight of dry matter.

Cultured vegetable extracts in accordance with the invention may typically contain, besides nitrite, sugars, fiber, protein, vitamins and calcium. In a preferred embodiment of the invention the nitrite source comprises at least 5 wt.%, based on the total dry solids weight of the composition, preferably at least 7.5 wt.%, more preferably at least 10 wt.% of one or more components selected from the group consisting of sugars, protein, fiber, vitamins and calcium. In a preferred embodiment of the invention the meat treatment composition comprises at least 0.5 wt.%, based on the total dry solids weight of the composition, preferably at least 1 wt.%, more preferably at least 2 wt.% of one or more components selected from the group consisting of sugars, protein, fiber, vitamins and calcium.

In an advantageous embodiment of the invention the vegetable extract comprises cultured celery extract, such as e.g. the products 'Veg Stable^{®} 504', 'Veg Stable^{®} 506' or 'Veg Stable^{®} 528', available Florida Food Products, Inc. and the products Accel 2000H and Accel XP, available from Kerry Inc.

In a preferred embodiment of the present invention, the composition comprises on a dry matter basis between 0.05 and 5% w/w acid equivalent of nitrite, more preferably between 0.1 and 4% w/w acid equivalent of nitrite, most preferably between 0.2 and 3% w/w acid equivalent of nitrite.

Vegetal fibers can be of interest as "label friendly" ingredients in meat products because of their potential contribution to minimizing moisture loss during cooking of the meat products and to improving quality attributes of meat products such as juiciness and tenderness. The inventors have found that it is particularly advantageous to make use of vegetal fiber selected from the group of microfibrillated cellulose fiber (MCF), inulin and combinations thereof in the compositions according to the invention.

In an embodiment of the invention, the composition comprises on a dry matter basis between 7 and 45% w/w, preferably between 8 and 42% w/w, of the vegetal fiber selected from the group of microfibrillated cellulose fiber, inulin and combinations thereof.

The MCF employed in accordance with the present invention preferably originates from parenchymal tissue from fruits, roots, bulbs, tubers, stalks, seeds or combination thereof. More preferably, the MFC originates from fruits.

Examples of suitable sources for MFC includes citrus fruit, tomato fruit, peach fruit, pumpkin fruit, kiwi fruit, apple fruit, mango fruit, sugar beet, sugar cane, beet root, turnip, parsnip, maize, oat, wheat, peas or combinations thereof. Even more preferably, the MFC originates from citrus fruit, tomato fruit, sugar cane, sugar beet or a combination thereof.

Preferably, the MFC originates from citrus fruit, sugar beet or a combination thereof, most preferably the MFC originates from citrus fruit.

The MFC in the composition according to the invention is typically produced from parenchymal material that besides cellulose contains hemicellulose and pectin. Preferably, the composition according to the invention contains hemicellulose and pectin from the same source(s) as the MFC. More preferably, the composition according to the invention contains a weight ratio of hemicellulose and pectin to MFC of between 0 and 1.3, more preferably of between 0.05 and 1.0, most preferably of between 0.1 and 0.7.

The MFC is obtainable from the aforementioned sources by processes generally known by those skilled in the art. WO 2006/033697, the disclosure of which is hereby incorporated by reference in its entirety, describes exemplary processes for producing the plant fiber materials suitable for use in the present invention. Such processes typically entail a high pressure homogenization step or other process steps in which high shear conditions are applied, in order to obtain the MFC with the properties as described herein.

It is known to those skilled in the art that treatment of the plant pulp with chemicals (e.g. acids and/or bases), enzymes (e.g. pectinase, protease, cellulase, hemicellulase or mixtures thereof) and/or heat, affects the solubilization and extraction of certain plant cell wall components, in particular pectin and hemicelluloses. This may be used to tailor the specific properties of the fiber material, especially the water binding capacity and/or viscosifying properties.

Particularly suitable MFC containing materials are commercially available from suppliers like J. Rettenmaier and Sohne GMBH under the Vitacel brand/name; Herbafood Ingredients under the Herbacel brand/name; and Fiberstar under the Citri-Fi brand/name.

The MFC that is contained in the food product typically comprises at least 80 wt% of cellulose microfibrils having a length L and a mean diameter D, wherein the ratio L/D is at least 10 and D is in the range of 3-70 nm.

The cellulose microfibrils of the MFC typically have a mean diameter smaller than 30 nm, more preferably smaller than 20 nm, most preferably smaller than 15 nm.

The average degree of crystallinity of the MFC typically is less than 40%, more preferably less than 35% and most preferably less than 30%.

Without wishing to be bound by any theory, it is believed that the advantageous effects of MFC are at least in part based on the water-binding capacity of the cellulose microfibrils. In a preferred embodiment of the invention, the MFC exhibits a water binding capacity within the rage of 4-25 g of water per gram MFC, most preferably within the range of 5-20 g of water per gram MFC.

The water binding capacity of MFC can be measured using the following procedure: 2.5 g of the MFC (dry powder) is placed into a 50 ml centrifuge tube and weighed (noted as W1). Then 40 g of milli-Q water (noted as W2) is added. The tube is closed and stirred by hand for one minute. The tube is centrifuged for ten minutes at 2000 rpm, and the supernatant is decanted and weighed (noted as W3). The water binding capacity (WBC) of the MFC is calculated by the following formula: WBC=(W2-W3)/W1. The WBC is expressed as grams of water per gram of MFC (g water/g MFC).

In an alternative embodiment of the invention, the vegetal fiber is inulin. Inulin is a natural dietary fiber material, present in many plants. Chicory root contains a relatively high amount of inulin and is therefore often used as an inulin source. Inulin is a polysaccharide chain of fructose monomers. It is commercially available in various grades of purity and various degrees of polymerization. like e.g. under the brand/name of Frutafit from Sensus.

In a preferred embodiment of the invention, the inulin is provided by a highly pure inulin product having a purity of at least 90% inulin on dry matter. In a more preferred embodiment, the purity of the inulin product is at least 95%, even more preferred is a purity of at least 99%.

In another preferred embodiment of the invention, the inulin has an average degree of polymerization of between 5 and 50 monomers, in a more preferred embodiment between 10 and 40, in an even more preferred embodiment between 15 and 35, most preferably between 20 and 30 monomers.

The composition according to the invention also comprises ascorbate. Ascorbate is approved as an antioxidant in food products and may be used to e.g. retard color and lipid oxidation and to enhance curing processes. Next to being an antioxidant, it is also known as a vitamin, namely vitamin C.

If the composition is a powder, the ascorbate is preferably selected from sodium ascorbate, potassium ascorbate, calcium ascorbate, ascorbic acid and combinations thereof. In the composition in liquid form, the ascorbate is preferably selected from ascorbate (in its dissociated form), ascorbic acid and combinations thereof.

The composition according to the invention comprises on a dry matter basis between 0.5 and 5% w/w acid equivalent of ascorbate, preferably between 1.0 and 4% w/w acid equivalent of ascorbate, more preferably between 1.2 and 3.5% w/w acid equivalent of ascorbate.

Ascorbate can be produced by means of chemical synthesis, fermentation or a combination of both techniques, but it can also be retrieved from natural sources such as fruit products. Examples of fruit products with a relatively high ascorbate content are camu camu, seabuckthorn, Indian gooseberry, rose hip, kakadu plum, guava, blackcurrant, orange and lemon. Extracts of these fruits are commercially available as an ascorbate source such as for instance Acerola Cherry 36 from Naturex. In a preferred embodiment of the invention, the ascorbate is provided by a fruit extract. In an even more preferred embodiment, the fruit extract is acerola extract.

In a preferred embodiment of the invention, the composition, when dispersed into distilled water of 20°C to provide 100 grams of dry matter per L of water, produces an aqueous composition having a pH in the range of 5.5 to 8.5, more preferably in the range of 5.8 to 8.0.

The present composition for maintaining or improving the quality of processed meat can typically be produced by combining various, preferably plant-based, sources of the functional ingredients. A composition in powder form can be obtained by providing the various components in powder form and preparing the composition by means of powder blending. A composition in liquid form can be obtained by providing at least one of the components in liquid form and mixing the other ingredients into the liquid. In a preferred embodiment, the acetate or lactate is provided in liquid form. It is also possible to subsequently dry the liquid composition thus obtained, in order to prepare a composition according to the invention in powder form. Drying methods such as spray drying are well known to persons skilled in the art.

According to a second aspect of the invention, a method for the preparation of a composition for maintaining or improving the quality of processed meat as described herein before is provided. The method comprises the steps of:
- providing an organic acid product selected from the group of a vinegar product, a lactic acid fermentation product and combinations thereof, containing on a dry weight basis at least 50% w/w acid equivalent of acetate and/or lactate, wherein the acetate is selected from sodium acetate, potassium acetate, calcium acetate, acetic acid and combinations thereof and wherein the lactate is selected from sodium lactate, potassium lactate, calcium lactate, lactic acid and combinations thereof,
- providing a cultured vegetable extract containing on a dry weight basis at least 0.3% w/w acid equivalent of nitrite
- providing a fruit extract containing on a dry weight basis at least 10% w/w ascorbate
- providing a vegetal fiber selected from the group of citrus fiber and inulin;
- mixing the organic acid product, the cultured vegetable extract, the fruit extract and the vegetal fiber to prepare a composition with a dry matter content of at least 30% w/w, preferably at least 50% w/w.

In another embodiment of the invention, a method for the preparation of a composition for maintaining or improving the quality of processed meat as described herein before is provided. The method comprises the steps of:
- providing an organic acid product selected from the group of a vinegar product, a lactic acid fermentation product, a propionic acid fermentation product and combinations thereof, containing on a dry weight basis at least 50% w/w acid equivalent of acetate and/or lactate and/or propionate, wherein the acetate is selected from sodium acetate, potassium acetate, calcium acetate, acetic acid and combinations thereof, wherein the lactate is selected from sodium lactate, potassium lactate, calcium lactate, lactic acid and combinations thereof, and wherein the propionate is selected from sodium propionate, potassium propionate, calcium propionate, propionic acid and combinations thereof,
- providing a cultured vegetable extract containing on a dry weight basis at least 0.3% w/w acid equivalent of nitrite
- providing a fruit extract containing on a dry weight basis at least 10% w/w ascorbate
- providing a vegetal fiber selected from the group of citrus fiber and inulin;
- mixing the organic acid product, the cultured vegetable extract, the fruit extract and the vegetal fiber to prepare a composition with a dry matter content of at least 30% w/w, preferably at least 50% w/w.

The products used in these preparation methods, i.e. the organic acid product, the cultured vegetable extract, the fruit extract and the vegetal fiber, have been described in detail herein before.

In a preferred embodiment of the invention, the pH of the composition is adjusted to obtain a value described herein before. If the pH needs to be increased this is preferably done by adding an appropriate amount of an alkali metal hydroxide. If it is desired to lower the pH of the meat treatment composition after combining the various components, this may be suitably done using an appropriate amount of acetic acid or lactic acid, even though the use of mineral acids for this purpose is not excluded.

Ascorbate may induce unwanted oxygen scavenging in other ingredients of the composition when in powder form. This reaction may be retarded or inhibited by the addition of a filler material to the powder such as silica, maltodextrin, starch. These filler materials are well-known to the person skilled in the art. The amount of filler material preferably is higher than 5% w/w, more preferably higher than 8% w/w, even more preferably higher than 10% w/w, most preferably higher than 12% w/w in the powder.

In a third aspect of the invention, a process for the preparation of processed meat is provided wherein the composition as described herein before is added. The composition may be used in liquid or dry form. If it is used in dry form, it may be reconstituted in a suitable quantity of water, e.g. tap water, before adding it to the meat. To this end, the ingredients are typically agitated for a period of time sufficient to form a homogeneous liquid, which may be a dispersion or solution.

The process for the preparation of processed meat according to the present invention typically comprises the step of adding the composition as described herein before to meat in an amount of between 0.5 and 15% w/w dry matter, preferably between 1.0 and 10% w/w dry matter.

The process according to the present invention is suitable and beneficial for the treatment of most conventional meat products typically offered for human consumption, regardless of the source and/or form in which it is offered.

In a preferred embodiment of the invention, the meat is selected from the group consisting of whole muscle meat, cuts or slices of whole muscle meat, ground or comminuted muscle meat and emulsified meat. In a preferred embodiment of the invention the meat is fresh meat, which may be in the form of whole muscle meat, cuts or slices of whole muscle meat or ground or comminuted muscle meat. In this context the term 'fresh' means that the meat has not been treated by cooking in between removal from the animal carcass and the treatment according to the invention. In a preferred embodiment, the meat is uncooked meat.

Preferably, the meat is obtained from beef cattle, pork, lamb, poultry, and game, most preferably from beef cattle, pork, chicken and turkey. In another embodiment of the invention, the meat is red meat.

The process for the preparation of processed meat may utilize any method that is known and/or conventionally used for combining fresh meat and an additive composition. For example, meat may be treated with the composition of the invention by dispersing it throughout the fresh meat. Suitable methods include injecting, pumping, spraying, soaking, dipping or otherwise dispersing the composition into or onto the meat. In addition, the method may comprise tumbling, kneading, massaging or otherwise manipulate the meat to further disperse the composition throughout the meat. In some embodiments, the composition is injected under pressure into the meat as part of an automated commercial meat production step. Suitable injectors may be set to pump a particular volume of the composition into each piece of the meat.

In a preferred embodiment of the invention, the process for the preparation of processed meat comprises adding an aqueous liquid containing the present preservation composition, and wherein the composition is added by injection tumbling.

Once the aqueous liquid has been dispersed throughout the meat, the meat may subsequently be cooked until the desired internal temperature is reached, packaged and refrigerated or frozen. Alternatively, once the aqueous liquid has been dispersed throughout the meat, the meat may be packaged, cooked and then refrigerated or frozen.

The processed meat obtainable by the process for the preparation of processed meat typically has advantageous characteristics with respect to moisture retention, color, texture, flavor and shelf life.

The invention has been described by reference to certain embodiments discussed above. It will be recognized that these embodiments are susceptible to various modifications and alternative forms well known to those of skill in the art. Many modifications in addition to those described above may be made to the structures and techniques described herein without departing from the spirit and scope of the invention. Accordingly, although specific embodiments have been described, these are examples only and are not limiting upon the scope of the invention.

Furthermore, for a proper understanding of this document and in its claims, it is to be understood that the verb "to comprise" and its conjugations used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

All patent and literature references cited in the present specification are hereby incorporated by reference in their entirety.

The examples are offered for illustrative purposes only, and are not intended to limit the scope of the present invention in any way.

### EXAMPLES

### Example 1

Two meat treatment compositions according to the invention are prepared in accordance with the recipes shown in Table 1. Dried neutralized vinegar (72 wt.% acetate) is prepared by neutralizing a concentrated vinegar (300 grain, Fleischmann) by adding NaOH until a neutral pH has been reached, and spray drying the concentrated vinegar. Na/Ca lactate powder (79 wt.% lactate) is prepared by spraying liquid sodium lactate onto calcium lactate powder in a fluidized bed and drying.

**Table 1**

| | **Wt.%** | |
|---|---|---|
| | **Composition 1** | **Composition 2** |
| Dried neutralized vinegar | 48 | 20 |
| Na/Ca lactate powder | | 37 |
| Fermented sugar powder¹ | | 16 |
| Cultured celery powder ² | 31 | 16 |
| Citrus fiber ³ | 11.5 | 6 |
| Acerola juice powder ⁴ | 9.5 | 5 |

| | | |
|---|---|---|
| ¹ Verdad N30 (40 wt.% propionate, 15 wt.% acetate, 9 wt.% lactate), ex Corbion ² Accel^{™} (3 wt.% sodium nitrite), ex Kerry ³ Herbacel AQ Plus Citrus N01, ex Herbafood ⁴ Acerola juice powder 34% (34 wt.% ascorbate), ex Dohler | | |

When applied in meat (composition 1 at about 1.4% w/w use rate and composition 2 at about 2.5% w/w use rate), these compositions provide meat products of excellent shelf life and organoleptic properties.

### Example 2

Meat treatment compositions according to the invention were tested in meat against a control meat with no additions and a reference meat to which phosphate had been added. The meat product in the tests was a restructured ham. Tests were performed on the preservative effect of the compositions, and on their contribution to the yield and flavor of the meat.

### Experimental Set-Up

The recipes of the meat treatment compositions are presented in Table 2. Dried neutralized vinegar (72 wt.% acetate) was prepared by neutralizing a concentrated vinegar (300 grain, Fleischmann) by adding NaOH until a neutral pH has been reached, and spray drying the concentrated vinegar.

**Table 2**

| | **Wt%** | | |
|---|---|---|---|
| | **Composition A** | **Composition B** | **Composition 1** |
| Dried neutralized vinegar | 50.5 | 68.1 | 48.0 |
| Cultured celery powder ¹ | 17.9 | 24.1 | 17.0 |
| Inulin ² | 31.6 | 0.7 | 30.0 |
| Acerola juice powder ³ | | 7.1 | 5.0 |

| | | | |
|---|---|---|---|
| ¹ Accel^{™} (3 wt.% sodium nitrite), ex Kerry ² Frutatex inulin, ex Sensus ³ Acerola juice powder 25% (1078), containing 25 wt.% ascorbate, ex NP Nutra | | | |

The meat treatment compositions were used in restructured ham products as described in Table 3.

**Table 3**

| **Ingredients** | **Control** | **Refer.** | **Product A** | **Product B** | **Product 1** |
|---|---|---|---|---|---|
| Ham chunks | 80 | 80 | 80 | 80 | 80 |
| | | | | | |

| **Brine:** | | | | | |
|---|---|---|---|---|---|
| Colorozo Salt | 1.8 | 1.8 | | | |
| | | | 1.692 | 1.692 | 1.692 |
| Na-ascorbate | 0.05 | 0.05 | | | |
| Phosphate | | 0.1 | | | |
| Dextrose | 0.8 | 0.8 | 0.8 | 0.8 | 0.8 |
| Composition A | | | 1.58 | | |
| Composition B | | | | 1.17 | |
| Composition 1 | | | | | 1.66 |
| Water | 17.35 | 17.25 | 15.93 | 16.34 | 15.85 |
| | | | | | |
| **Total** | 100 | 100 | 100 | 100 | 100 |

The compositions were applied to the meat by means of vacuum meat tumbling, applying a green weight marination rate of 25% w/w, meaning that 25% w/w brine was added to 100% w/w meat formulation as shown in Table 2. The brines were prepared by suspending the dry ingredients in water, and cooling the suspension to 0°C before applying it to meat. The amount of water in the suspensions was adjusted such that a marination rate of 25% w/w was achieved in the meat.

Materials and equipment that were used to make the meat products were as follows:
- Tumbler, Type: LU40, LUMAR Ideal Inc., Montreal Canada
- Turbovac, Type: SB-420, HFE Vacuum Systems; program 1 for vacuum, program 6 for sealing.
- Cooking crimp bags 300*400 mm CN301/CT-1
- Cooking: steam cooking cabinet Kerres CS 700
- Novasina LabPartner a_{w}, water activity meter
- Ham cast type ZM201053, EJ Diest

The meat products were prepared according to the following procedure:
1. Room temperature 10°C.
2. Lean pork meat (topside part); was ground with a 13mm plate.
3. The ground meat was divided in portions of 850 gram.
4. Brines were prepared at temperature of 0-4°C. The meat treatment compositions were added after salt and dextrose.
5. The ingredients were mixed until fully dispersed.
6. The brine and meat portions were then mixed by hand (with gloves) until homogenously dispersed.
7. The meat mixture was packed subsequently in vacuum bags (at 45mbar) and then tumbled at 8 rpm per minute at 4°C for 120 minutes, followed by 30 minutes rest and another 120 minutes of tumbling.
8. The tumbled meat was then stored approximately 18 hours at 0°C (overnight).
9. The next day, 800 gram of tumbled meat were repacked and vacuumed in cook crimp bag.
10. The bag filled with meat was placed in a ham cast type ZM201053.
11. The samples were cooked in the Kerres cabinet until the internal temperature of 72°C was reached according to the cooking program shown in Table 4.
12. After the cooking process had finished, the ham casts (with meat inside) were stored at 0°C/32°F.
13. The samples were taken out and evaluated 36 hours later for yield and 7 days later for sensory testing.

**Table 4**

| **Steps** | **Function Number** | **Time** | **Temperature** |
|---|---|---|---|
| 1 | 5 (cook) | Chamber | 75 °C |
| 2 | 5 (cook) | 120 min. | 75 °C |
| 3 | 8 (shower) | 15 min. | |
| 4 | 1 (dry) | 120 min. | 8 °C |

### Results and discussion

**Table 5**

| | **pH** | | | |
|---|---|---|---|---|
| | **brine** | **after tumbling** | **finished ham** | **Yield** |
| Control | 7.54 | 5.83 | 6.16 | 76.1 |
| Reference | 7.74 | 5.91 | 6.20 | 93.8 |
| Product A | 8.09 | 5.95 | 6.23 | 82.2 |
| Product B | 6.36 | 5.91 | 6.16 | 84.3 |
| Product 1 | 6.34 | 5.88 | 6.22 | 85.6 |

A comparison of the results obtained for Products 1 and A shows that the presence of acerola juice powder in the meat treatment composition improved the overall yield. Comparison of the results for Products 1 and B further shows that increasing the inulin content of the meat treatment composition from 0.7 to 30 wt.% also increased the yield.

After overnight storage at 0 °C the color of the products was measured by determining the the L-a-b color values. The results are shown in Table 6.

**Table 6**

| | **L^{∗}** | **a^{∗}** | **B^{∗}** | **Δ_{Ref}** |
|---|---|---|---|---|
| Control | 66.09 | 15.99 | 7.98 | 0.73 |
| Reference | 66.01 | 16.32 | 8.63 | 0.00 |
| Product A | 63.70 | 15.32 | 9.19 | 2.58 |
| Product B | 65.36 | 15.43 | 9.85 | 1.65 |
| Product 1 | 65.74 | 14.72 | 9.60 | 1.89 |

The comparison of the results of the color measurements for Products 1 and A shows that acerola juice powder improved the color by bringing it closer to the reference.

## Claims

1. A composition for maintaining or improving the quality of processed meat comprising on a dry matter basis:
- between 20 and 60% w/w acid equivalent of an organic acid component selected from the group of acetate, lactate, propionate and combinations thereof;
- between 0.05 and 5% w/w acid equivalent of nitrite;
- between 0.5 and 5% w/w acid equivalent of ascorbate; and
- between 5 and 50% w/w of a vegetal fiber selected from the group of microfibrillated cellulose fiber, inulin and combinations thereof;
wherein the composition when diluted with distilled water of 20°C to a dry matter content of 10% w/w has a pH in the range of 5.0 to 9.0.

2. Composition according to claim 1, wherein the composition is a powder having a water content of less than 15% w/w; wherein the organic acid component is selected from sodium acetate, sodium lactate, sodium propionate, potassium acetate, potassium lactate, potassium propionate, calcium acetate, calcium lactate, calcium propionate, acetic acid, lactic acid, propionic acid and combinations thereof; wherein the nitrite is selected from sodium nitrite, potassium nitrite, nitrous acid and combinations thereof; and wherein the ascorbate is selected from sodium ascorbate, potassium ascorbate, ascorbic acid and combinations thereof.

3. Composition according to claim 1, wherein the composition is an aqueous liquid having a dry matter content of 10 to 80% w/w.

4. Composition according to any one of the preceding claims, wherein the inulin has an average degree of polymerisation of at least 15, preferably at least 20 monomers.

5. Composition according to any one of the preceding claims, wherein the purity of the inulin is at least 95%, preferably at least 99%.

6. Composition according to any one of the preceding claims, comprising on a dry matter basis between 25 and 55% w/w, preferably between 30 and 50% w/w, acid equivalent of acetate and/or lactate and/or propionate.

7. Composition according to any one of the preceding claims, comprising on a dry matter basis between 0.1 and 4% w/w, preferably between 0.2 and 3% w/w, acid equivalent of nitrite.

8. Composition according to any one of the preceding claims, comprising on a dry matter basis between 7 and 45% w/w, preferably between 8 and 42% w/w, of the vegetal fiber.

9. Composition according to any one of the preceding claims, wherein the aqueous composition obtained by dispersing 10% w/w of the composition into distilled water of 20°C has a pH in the range of 5.5 to 8.5, more preferably in the range of 5.8 to 8.0

10. Composition according to any one of the preceding claims, comprising on a dry matter basis between 1.0 and 4% w/w, preferably between 1.2 and 3.5% w/w, of ascorbate.

11. Method for the preparation of a composition for maintaining or improving the quality of processed meat, comprising
- providing an organic acid product selected from the group of a vinegar product, a lactic acid fermentation product, a propionic acid fermentation product and combinations thereof, containing on a dry weight basis at least 50% w/w acid equivalent of acetate and/or lactate and/or propionate, wherein the acetate is selected from sodium acetate, potassium acetate, calcium acetate, acetic acid and combinations thereof, wherein the lactate is selected from sodium lactate, potassium lactate, calcium lactate, lactic acid and combinations thereof, and wherein the propionate is selected from sodium propionate, potassium propionate, calcium propionate, propionic acid and combinations thereof.
- providing a cultured vegetable extract containing on a dry weight basis at least 0.3% w/w acid equivalent of nitrite
- providing a fruit extract containing on a dry weight basis at least 10% w/w ascorbate
- providing a vegetal fiber selected from the group of citrus fiber and inulin;
- mixing the organic acid product, the fruit extract and the vegetal fiber to prepare a composition with a dry matter content of at least 30% w/w, preferably at least 50% w/w.

12. Method according to claim 11, wherein the method produces a composition according to any one of claims 1-10.

13. A process of preparing processed meat, said process comprising adding the composition according to any one of claims 1-10 to meat in an amount of between 0.5 and 15% w/w dry matter, preferably between 1.0 and 10%.

14. Process according to claim 13, wherein the meat is red meat.

15. Process according to claim 13 or 14, wherein the composition is an aqueous liquid and wherein the composition is added by injection tumbling.
